# EUROPEAN PATENT APPLICATION

(11) **EP 4 834 801 A1**
(43) Date of publication of application: **04.11.2026**
(21) Application number: 25173809.2
(22) Date of filing: 30.04.2025
(51) Int. Cl.: B65G 1/04

(54) **CONTAINER MOVEMENT OPERATIONS AT A PORT OF AN AUTOMATED STORAGE AND RETRIEVAL SYSTEM**

(71) Applicant: AutoStore Technology AS, 5578 Nedre Vats (NO)
(72) Inventor: Hörnlund, Staffan, 5578 Nedre Vats (NO)
(74) Representative: Kilburn & Strode LLP

(57) **Abstract**

The disclosure relates to a computer-implemented method for moving a container within a port of an automated storage and retrieval system, comprising executing, by a first component of a port, a first movement operation associated with a container; and executing, by a second component of the port, a second movement operation associated with the container; wherein the second movement operation is initiated while the first movement operation is ongoing.

## Description

### TECHNICAL FIELD

The disclosure relates to container movement operations at a port of an automated storage and retrieval system. More particularly, it relates to a port of an automated storage and retrieval system, and a method of execution of container movement operations within the port.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

Ports allow for goods to be introduced or removed from the storage system. At ports containers are presented such that the containers and/or their interiors can be accessed by a human or robotic picker. Such a picker removes from or introduces goods to the container at the port or in some examples removes or introduces the container itself. The term 'port' in this context can include picking stations, packing stations, container workstations or the like.

Accordingly, flow of goods into and out of an automated storage and retrieval system is typically achieved by arranging containers so that they can be accessed by a picker by arranging containers at ports. Ports as found in the prior art can present a bottleneck in the flow of goods into and out of the automated storage and retrieval system.

One or more aspects of the presently claimed invention are set out in the independent claims. Additional aspects and features of the presently claimed invention are set out in the dependent claims and in the description below.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a flowchart setting out an example method for moving a container within a port;
Fig. 6A to Fig 6C shows an example sequence of operations of a port comprising a conveyor belt configured to perform a method described herein;
Fig. 7A to Fig. 7D shows an example sequence of operations of a port operable to tilt a container and configured to perform the method described herein;
Fig. 8 shows a flowchart setting out a further example method for moving a container within a port;
Fig. 9 shows a flowchart setting out a further example method for moving a container within a port comprising a hatch; and
Fig 10 shows a flowchart setting out a further example method for moving a container within a port operable to tilt a container and comprising a hatch.

### DETAILED DESCRIPTION

In overview, the disclosure relates to a method of moving a container within a port by executing overlapping movement operations of at least two components of the port to minimise the time taken by the port to perform a given handling operation on a container. In particular, a second component, such as a container lift, may by instructed to start operation before a first component, such as a container support configured to translate a container within the port, has finished its operation. Any lag in the commencement of the second component's operation is thereby accounted for and does not add to the time taken to handle a container. Put another way, handover of a container or associated subsequent operations involving the container can be synchronised more effectively such that there is no 'down time' where the container is not moving or a component associated with the container is not yet in the desired position. Movement operations associated with a container may be operations which serve to effect the presentation of a container to a picker at a port or to return a container from a port presentation position or picking location back to a storage location within the storage system. Operations which process containers through ports are also referred to as container handling operations.

In more detail, according to a first aspect there is provided a computer-implemented method for moving a container within a port of an automated storage and retrieval system. The method comprises executing, by a first component of a port, a first movement operation associated with the container and executing, by a second component of the port, a second movement operation associated with the container. The second movement operation is initiated while the first movement operation is still ongoing, as described above. Accordingly, there is an overlap where the first and second movement operations are occurring concurrently.

In some examples, the first movement operation is performed by a first component comprising a container support. A container support may be any element which can support a container, such as a platform which the container can rest upon, or a mechanism which suspends or carries the container from the side(s) or from above. A container support provides a position for storage and movement of containers within the port. In some examples, the container support may comprise a conveyor belt. A conveyor belt allows efficient handling of one or more containers, as well as providing (temporary) storage positions for said containers. The use of conveyor belts simplifies the design of a port. In some examples, the container support comprises one or more independently movable frames or platforms, each configured to accommodate a container. Such frames enable containers to be moved independently within the port, allowing for greater flexibility of port movements. In some examples, the first movement operation comprises translating a container within a port to a container lift and/or an opening in the port. Translation of containers within the port allows for containers to be moved between components and locations, enabling greater versatility of container handling operations and efficient movement of containers. In the context of this disclosure, translation of a container may be considered as a generally horizontal movement of the container, and may be contrasted with a lifting or lowering operation.

In some examples, the second component comprises a container lift. A container lift may be configured to raise or lower a container to a predetermined height or location. For example, in the context of a picking operation at a port, a container lift may be configured to raise a container to a suitable height to enable a picker to access the container. Container lifts can also be used to allow a port to handle containers with different heights, and generally to assist in moving containers between components or locations of a port and an automated storage and retrieval system. In some examples, the second movement operation comprises lifting a container towards an opening in the port using the container lift.

In some examples the second component initiates a third movement operation associated with the container while the first and/or second movement operation is ongoing. Further parallel execution of movement operations can further optimise the container handling operations of a port. In some examples, the third movement operation comprises tilting the container. Tilting a container may provide improvements in ease of access to the contents of a container by a picker, for example in cases where the container is tilted toward the picker at a presentation position (also referred to as a 'picking location' or 'picking position') of the port.

In some examples, the method further comprises executing, by a third component, a fourth movement operation associated with the container. Further movement operations can be provided to improve container handling operations. In some examples, the fourth movement operation is initiated whilst the first and/or second and/or third movement operation is ongoing. Further parallel execution of movement operations can further optimise the container handling operations of a port. In some examples, the third component comprises a hatch arranged to cover an opening of the port. Provision of a hatch over an opening of the port prevents objects from falling into the port mechanism and improves safety by preventing access to the internal elements of the port by a user. In some examples, the fourth movement operation comprises opening the hatch. The hatch can begin opening before the container is fully in place at the presentation position, further optimising the container handling operations of the port.

In some examples, the first component comprises a container lift and the second component comprises a hatch arranged to cover an opening of the port. In these examples, the first movement operation may comprise lifting the container using the container lift and the second movement operation may comprise opening the hatch. The container lift and hatch thereby work together to present the container, for example at a presentation position.

In other examples, the process may be reversed such that the first movement operation comprises closing the hatch, and the second movement operation comprises lowering the container away from the opening in the port using the container lift. A container can thereby be removed from a presentation position near the opening in the port to return to the automated storage and retrieval system using the same optimisation of container handling operations.

Reversed operations may also be performed using a container lift and a container support. For example, the first movement operation may comprise lowering a container away from an opening in a port using a container lift, and the second movement operation may comprise translating the container within the port using the container support. A container can thereby be removed from a presentation position near the opening in the port to return to the automated storage and retrieval system using the same optimisation of container handling operations.

In some examples, there is provided a port for an automated storage and retrieval system, the port comprising a first component, a second component and, optionally, a third component. The port is configured to perform any of the container movement methods described herein, in particular the methods as described above. Such a port provides optimised container handling operations.

As described herein, the term 'port' may refer to a collection of components arranged to convey, handle or otherwise move a container from an automated storage and retrieval system to a presentation position where the container is presented to a picker.

In some examples, the first component comprises a container support. A container support provides positions for storage and movement of containers within the port as described above and can take any of the forms described above or elsewhere herein.

In some examples, the second component comprises a container lift. A container lift enables a port to raise or lower a container to a predetermined position as described above and can take any of the forms described above or elsewhere herein.

In some examples, the port comprises a computing device configured to control the (components of the) port. A computing device for issuing commands for the port reduces reliance on communication with additional computing devices.

In some examples, an automated storage and retrieval system comprises a port as described herein. The automated storage and retrieval system may comprise a computing device configured to control the port. In some examples, the computing device is further configured to control other components of the automated storage and retrieval system. Centralised control of the automated storage and retrieval system allows for better coordination of container handling events in the system.

In some examples, a computer readable medium storing instructions which, when executed, cause a port of an automated storage and retrieval system to perform any of the container movement methods described herein is provided. Such computer instructions as described herein provide optimised container handling operations.

### Automated storage and retrieval system overview

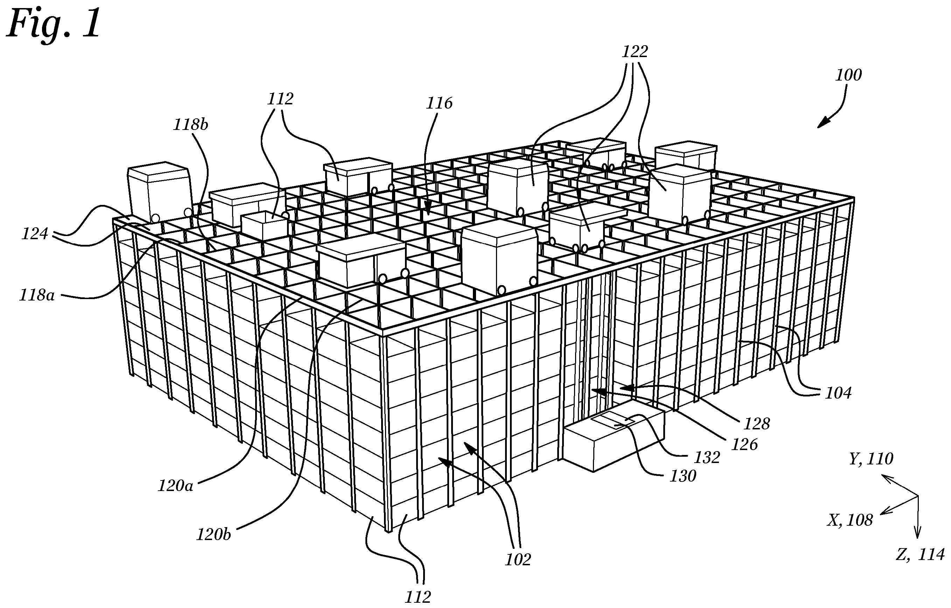

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers, which may also be referred to as 'bins', 112 are stacked on top of each other, preferably in a self-supporting manner, in the Z direction 114 in the columns 102, forming a storage volume of storage cells for respective containers 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, or robots, 122, which can be of a range of size, shape and function, are provided and configured to run on the rails 118, 120 and to transport containers 112 in both the X and Y directions 108, 110. The robots 122 are additionally configured to lift and lower containers 112 from/into the columns 102 in the Z direction 114, the containers 112 optionally being guided by the vertical frame members 104. The robots 122 access the containers 112 via access openings 124 above the columns 102 and formed between the rails 118, 120.

Some columns 102 may be used for alternative purposes than container storage. For example, port columns 126, 128 comprise port or access columns allowing transfer of a container 112 in and/or out of the grid 100. Port columns 126, 128 provide a vertical channel for lifting of a container 112 from, or lowering of a container 112 to, a port or ports 130, 132. The ports 130, 132 are shown in Fig. 1 at the lowest level of the grid, however ports can be located at any vertical position along the column. The respective port columns 126, 128 can be assigned for removing ('drop-off') and/or returning or delivering ('pick-up') containers 112 from/to the grid 100. The ports 130, 132 are therefore configured to allow containers 112 to be removed and reintroduced (horizontally) into the associated port column. As such, a port 130, 132 can comprise a conveyor (not shown in Fig. 1) onto which a container 112 may be lowered and transported horizontally out of the port column. The port columns 126, 128 include an opening or access point through which containers 112 can enter and leave the column.

Containers 112 can be transported along the top of the grid 100 to and/or from a port column 126, 128 by robots 122, and from a port 130, 132 to a location outside the grid 100, which may be an access station (not shown) for processing of the container 112 or its contents, such as a picking station for adding content to, or removing content from, the container 112. In alternative examples (not shown), the container 112 may be transported to a port of another grid on the same or another level, or to an external facility. Transport of containers 112 to and from ports 130, 132 may be by any appropriate means (not shown) including conveyors, transport vehicles, lifts or robots.

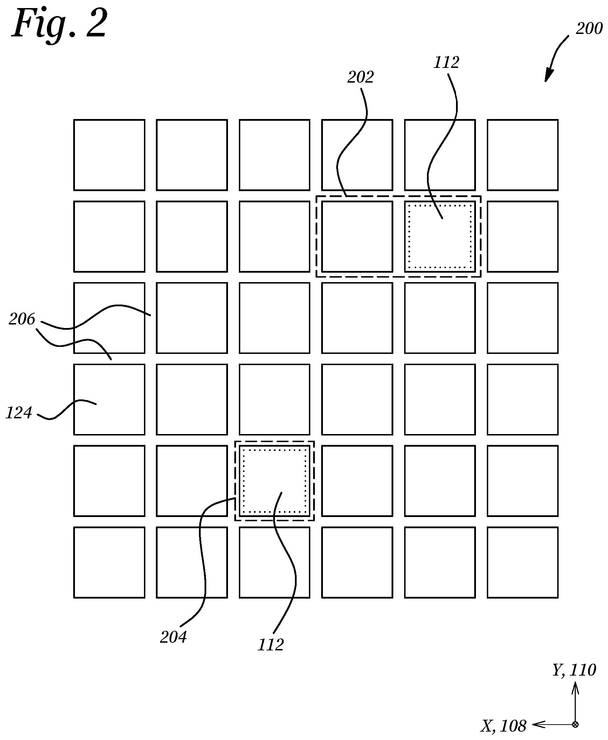

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to containers 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

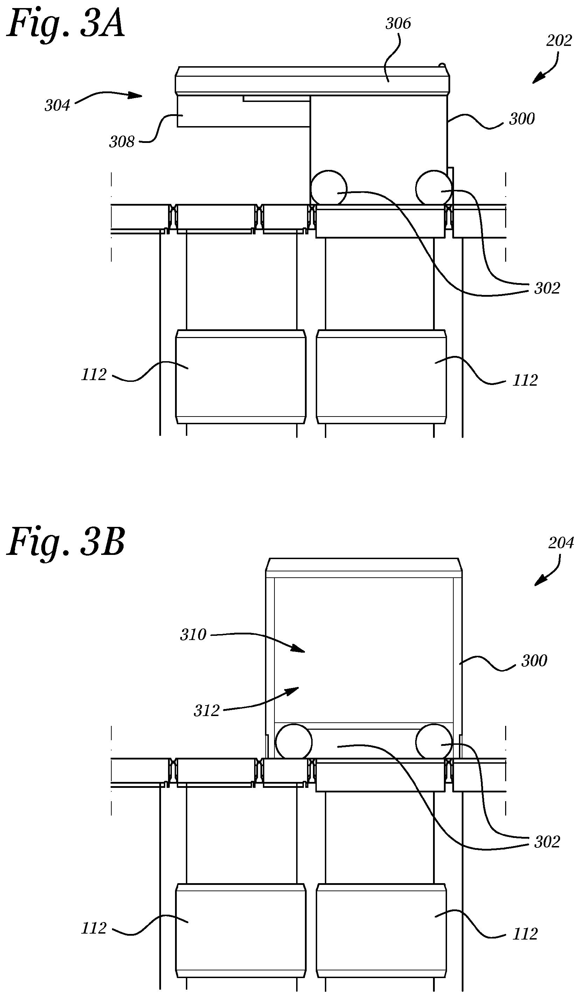

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a container 112; for example, by gripping a part of the container 112, or by passively or actively engaging a suitably configured part of the container 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more containers 112, for use, for example, while transporting the container 112.

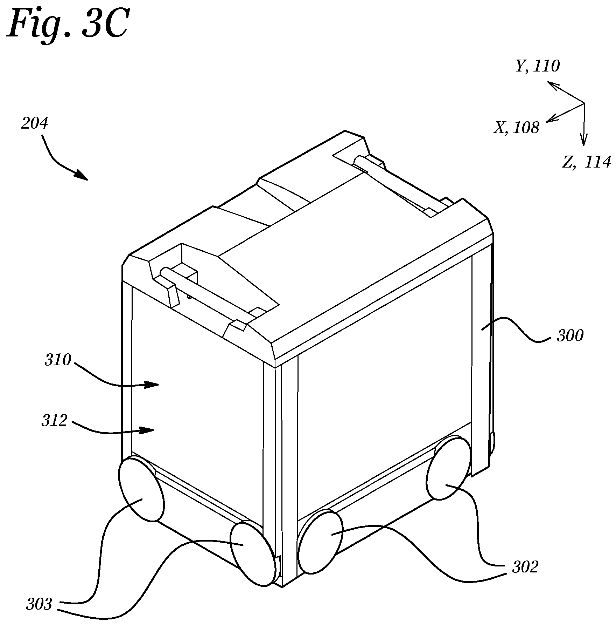

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

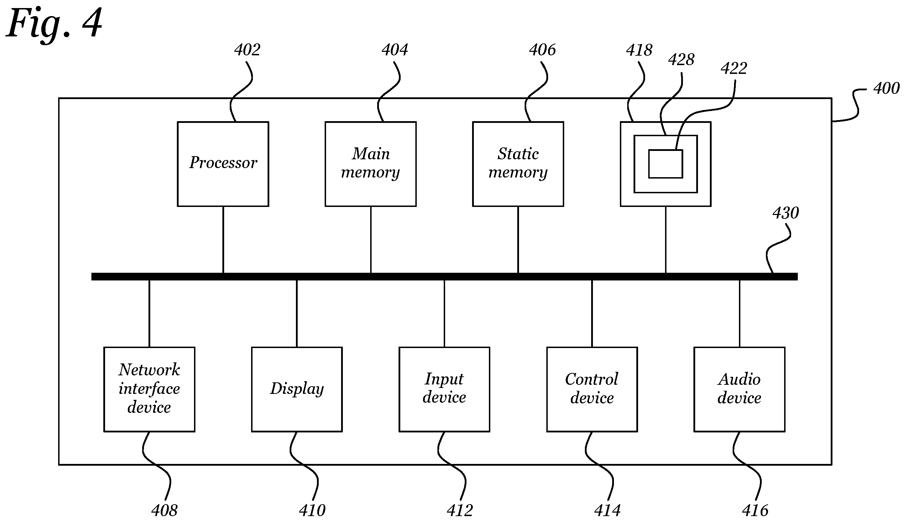

Control and monitoring of the automated storage and retrieval system, including monitoring and storing container position, controlling container delivery, retrieval and transport, port component control, and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each container 112 is given a unique identifier, which may be marked on the container 112 using a computer-readable identifier (e.g., a barcode, quick-response code or radio-frequency identification tag) to ease identification of the container 112. A database of the processing system 400 stores, in association with the unique identifier, the position and, optionally, content of each container 112. When a container 112 is moved (e.g., when it is retrieved from the grid 100), the database is updated to record its change in position.

When it is desired to retrieve a container 112 from the grid 100, under control of the processing system 400, a robot 202, 204 is routed via the rail system 116 to the vertical column 102 including the storage cell where, according to the database, the container 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the container 112 to the robot 202, 204. The robot 202, 204 then transports the container 112, for example, to the drop-off port column 126, 128 for delivery to the port 130, 132 and subsequent processing external to the grid 100. In the event that the target or designated container 112 is below other containers in the stack then the robot 202, 204 or multiple robots, which may be dedicated to the task, are controlled in a 'digging' operation to sequentially lift and reposition, temporarily or permanently, containers above the target container 112 in order for it to be retrieved. It will be appreciated that other operations in relation to the container 112 can be carried out in a similar manner. For example, a container 112 can be delivered for storage in the grid 100 at the port 130, 132 of the pick-up port column 126, 128, gripped and lifted by a robot 202, 204 and delivered to the desired storage cell, containers above the desired position being repositioned if necessary as discussed above.

### Improved container movement operations

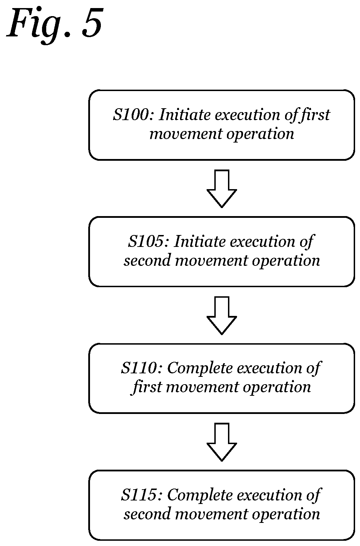

Turning now to Figs. 5-10, improved methods and systems for performing container movement operations at a port of a storage and retrieval system are described. The methods and systems may be incorporated into the storage and retrieval system described above with reference to Figs 1-4. In particular, the methods may be performed at or by a port such as one of ports 130, 132 described above.

In a first aspect, an example method for operating a port is set out in Fig. 5. At step S100 of the method, a first movement operation associated with a container is initiated. Within the context of the present disclosure, a movement operation associated with a container should be understood as an operation which involves movement of one or more components in a sequence of operations associated with moving the container to and/or through the port, for example while presenting the container at a presentation position of the port or to accepting the container back from the presentation position.

In some examples, an initiation of a movement operation may comprise an instruction being sent to a component to move or actuate, such that the component begins movement or preparation for movement in response to the instruction. In some examples, an initiation may also comprise providing power to a component such that movement begins and/or slack is taken out of any linkages within the component. In some examples, a movement operation may comprise actuation of a single component. In some examples, a movement operation may comprise actuation of a group of components configured to collectively perform an operation.

At step S105, a second movement operation is initiated. Importantly, this step occurs before the first movement operation has completed. This means that the second movement operation can already begin while the first movement operation completes. This advantageously reduces lag that may otherwise occur if the second movement operation were only initiated once the first movement operation had completed. For example, in the context of a port component, there is often a degree of slack in the couplings or connections of the component as noted above. This means that there is a delay between a movement operation being commenced and movement of the components actually occurring, because the initial phase of the movement operation acts only or primarily to take the slack out of the system before the component can actually begin to move as intended or perform the intended operation. Alternatively or additionally, a delay may be caused by the time taken to process an instruction received by the component. The disclosed method accounts for such possible delays by commencing the second movement operation, at step S105, before the first movement operation is completed.

At step S110 the first movement operation is completed, and at step S115 the second movement operation is completed. The first and second operations thereby overlap in their execution times, in that there is a period of time in which both the first and the second movement operations are being executed. It will be appreciated that the order of steps S110 and S115 shown in Fig. 5 is not limiting, and the second movement operation may in some examples complete before the first movement operation completes.

Movement operations associated with a container 602 as described herein may not be limited to operations which directly result in movement of a container within a port, and may additionally or alternatively relate to movement of components which facilitate movement of or interaction with the container at a port, such as opening a hatch or door which would otherwise impede the movement of the container or access to the container. A movement operation associated with a container should therefore be understood in the present context as a movement of a component which serves the objective of handling (e.g. moving or facilitating access to) a container at a port.

The duration for which any two operations, in any of the examples described herein, may overlap may typically be between 0.1 to 2 seconds. In other words, a second movement operation may be initiated within 0.1 to 2 seconds before completion of a preceding first movement operation. This overlap is suitable for the majority of components that may be found in a port associated with movement or handling of a container in an automated storage and retrieval system such as that described with reference to Fig.1-4. It will be appreciated that in practice the precise timing and overlap of operations will be dependent upon the components used in a given port, and on the particular characteristics of that port. For example, a component with a high number of linkages may have more 'slack' associated with those linkages. Removing that 'slack' requires time, increasing the delay between an initiation of the movement of the component and a point where the component begins to move effectively. In such cases, a greater overlap may be required than for components with fewer linkages or that exhibit less delay in moving after initiation. In this context, effective movement of a component is movement sufficient to displace a container, a hatch, or the like.

In some examples, components may have a high inertia and require the application of power for a set duration to begin effective movement. For example, a component may be heavy and require some milliseconds to start moving with an appropriate speed. In other examples, such as a hatch, the hatch may be large enough that even in motion it may fulfil the purpose of preventing foreign objects in the port for long enough that a container can arrive at a presentation position before the hatch has opened.

For operations with a low number of linkages, a typical duration of overlapping operations is between 0.1 to 1 second. For operations with a high number of linkages, a typical duration would be between 0.5 to 2 seconds. As will be understood, characteristics of the second or later operation influence the duration of overlap between the second and the first operation. It will be further appreciated that, once provided with the insights and direction of the present disclosure, a skilled reader would be able to implement the disclosed methods and systems and determine appropriate overlap timings between components without undue burden or experimentation.

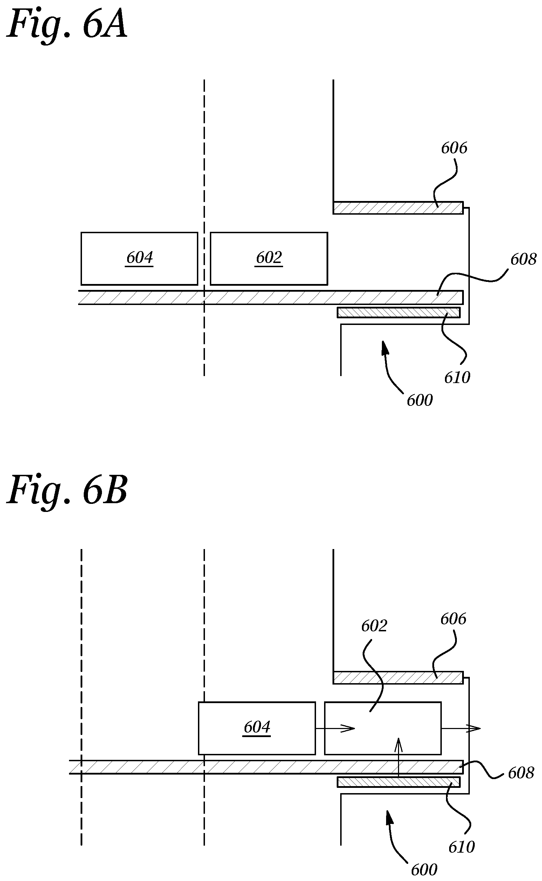

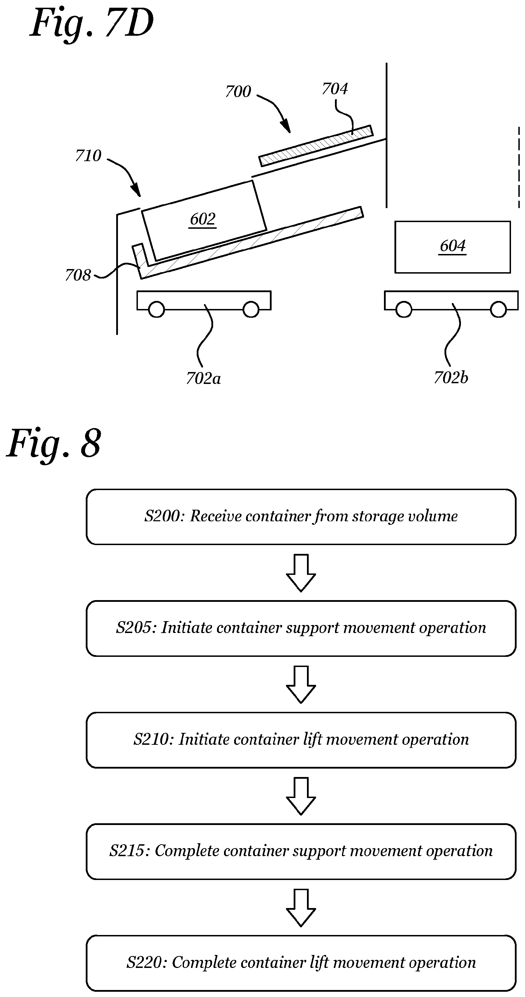

Fig. 6A to Fig. 6C show a sequence of operations of an example of a port 600 implementing the methods described herein. The particular sequence of operations shown in Fig. 6A to 6C will be discussed with reference to the sequence of steps set out in Fig. 8, and can be considered as a specific example implementation of the general method just described with reference to Fig. 5.

Fig. 6A shows a port 600, which may be an example of port 130 or 132 described above with reference to Fig. 1. Port 600 in this example comprises a container support 608, a container lift 610, and a hatch 606. In this particular example, container support 608 comprises a conveyor belt. The port 600 is shown in the process of moving two containers, 602, 604, which may be examples of containers 112 described above with reference to Fig. 1.

With reference now to Fig. 6A to 6C in combination with the sequence of Fig. 8, in the example of Fig. 6A to Fig. 6C containers 602, 604 have been received S200 by the port 600 from a storage volume (not shown), such as from a column in grid 100 described with reference to Fig. 1.

At step S205, the container support 608 performs a movement operation as shown in Fig. 6B. In this example, the conveyor belt performs the container support movement operation by moving the containers 602, 604 towards an opening in the port. In Fig. 6B this is represented by a translation of the containers 602, 604 to the right as shown by the horizontal arrows of Fig. 6B.

At step S210, the container lift 610 initiates a container lift operation. In Fig. 6B this is represented by a lifting of the container 602 in a vertically upwards direction as shown by the vertical arrow of Fig. 6B.

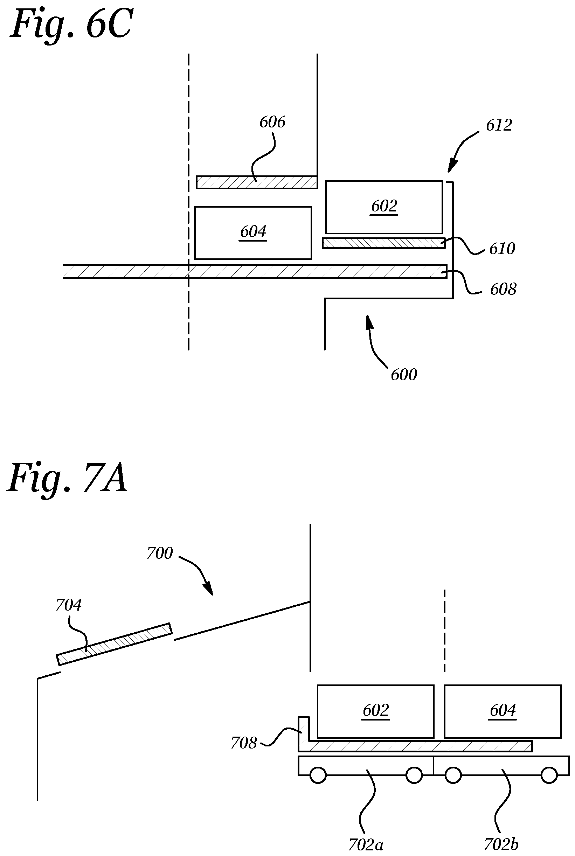

As shown in Fig. 6C, the lifting operation initiated at step S210 ultimately causes the container 602 to be lifted by the container lift 610 from the conveyor belt 608 to an opening 612 in the port 600.

At step S215 the container support 608 completes the movement operation initiated at step S200. Importantly, between step S210 and step S215 the container support 608 and the container lift 610 operate concurrently, eliminating any lag between the container 602 arriving at the container lift 610 and the container 602 being lifted by the container lift 610. In particular, during the period in which step S215 is being completed, for example as movement of the container 602 onto the container lift 610 is being completed, the container lift 610 is already initiated to move. This means that any lag due to a delay in the container lift 610 moving (e.g. due to slack in the component or transmission delay in the instructions) does not delay movement of the container. Instead, by the time container lift 602 actually starts moving, the first movement operation has completed and the container 602 is in position on container lift 610. The container lift 610 then lifts the container 602 in a vertically upwards direction towards an opening in the port 612 as described above in relation to step S210.

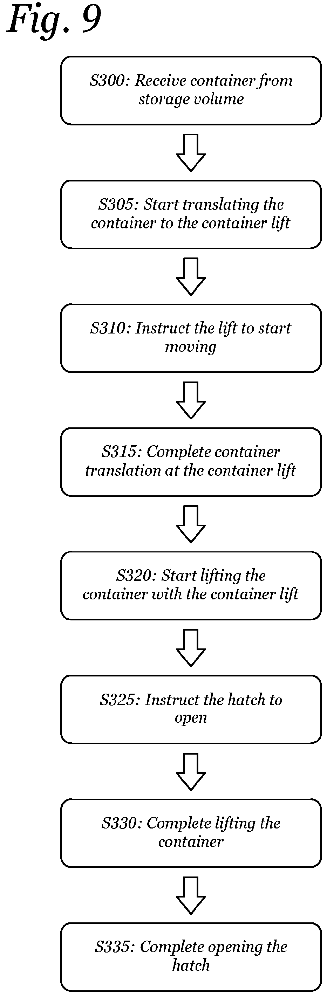

At step S220 the lifting operation is completed and the container 602 has arrived at a presentation position as shown in Fig. 6C, in this example at the port opening 612. At this position, in the example of Fig. 6C a hatch 608 is retracted (discussed in further detail in relation to Fig. 9 below). A picker (not shown) can thereby now access container 602 and/or an inner volume of the container 602.

The particular sequence of operations shown in Fig. 6A to 6C will now be discussed again, this time with reference to the sequence of steps set out in Fig. 9. As in the case of the sequence of Fig. 8, the sequence of Fig. 9 can be considered as a specific example implementation of the general method described above with reference to Fig. 5. The sequence of Fig.9 may also be considered as an extension of the sequence of Fig. 8.

Accordingly, and with reference now to Fig. 6A to 6C in combination with the sequence of Fig. 9, as shown in Fig. 6A a container 602 is received S300 by the port 600 from the storage volume (not shown), such as from a column of grid 100. The conveyor belt 608 starts S305 to translate the container 602 towards the container lift 610, as shown in Fig. 6B. At step S310 the container lift 610 is instructed to start moving. At step S315 the conveyor belt ceases movement.

It will be appreciated that steps S300, S305, S310 and S315 are equivalent to steps S200, S205, S210 and S215 of Fig. 8.It will further be appreciated that the conveyor belt 608 and container lift 610 are therefore operating concurrently in the interval between step S310 and S315.

At step S320 the container 602 is lifted by the container lift 610 after the container 602 has arrived at the container lift 610. It is important to note that the initiation S310 of the container lift 610 movement had already occurred before the container 602 had arrived at the container lift 610, so that there is minimal delay between the container 602 arriving and being lifted.

At step S325 the hatch 606 is instructed to open. This operation overlaps with the lifting operation, in that the initiation of the opening of the hatch 606 occurs during the operation of the container lift 610.

As shown in Fig. 6C, at step S330 the container lift 610 completes lifting the container 602 to the opening 612 in the port 600. At step S335 the hatch 608 completes opening. At this point, the container 602 is at a presentation position. It is important to note that the initiation S325 of the hatch 606 movement occurred before the container 602 had arrived at the presentation position, so that there is minimal delay between the container 602 arriving and being available for picking.

In some examples, such as in Fig. 6A to Fig. 6C, a hatch 608 may need to be opened to a certain or full extent before a container 602 can be arranged at a presentation position because the hatch 608 would otherwise block the opening 612 at the presentation position and would thus hit the container if not first retracted. In other examples, such as those described below, a hatch 608 is arranged such that it does not prevent a container 602 from being arranged in the presentation position. In such other examples, a hatch 608 may be provided above the presentation position. It will be appreciated that the timing of opening the hatch 608, and in particular the time for which the operation of opening the hatch 608 overlaps with a preceding operation, may be adjusted accordingly to ensure the hatch 608 is at a desired position by the time the container 602 arrives at the opening 612.

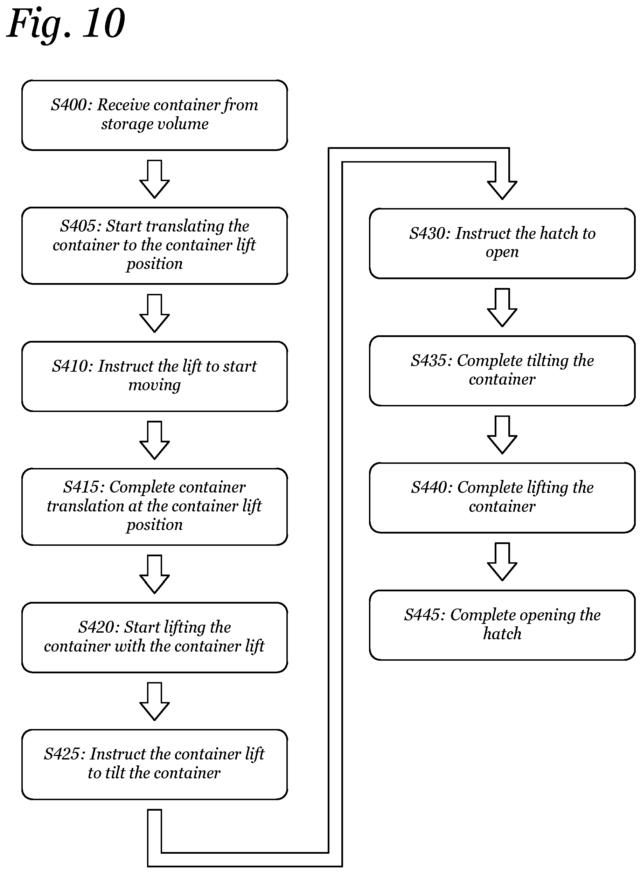

Fig. 7A to Fig. 7D depict a further example sequence of operations for an example port 700 implementing the methods described herein. The particular sequence of operations shown in Fig. 7A to 7D will be discussed with reference to the sequence of steps set out in Fig. 10, and can again be considered as a specific example implementation of the general method described above with reference to Fig. 5. The sequence of Fig. 10 may also be considered as an extension of the sequence of Fig. 8 and Fig. 9.

Fig. 7A shows a port 700, which may be an example of port 130 or 132 described above with reference to Fig. 1. Port 700 in this example comprises a pair of container support frames 702a, 702b, a container lift 708, and a hatch 704. Respective containers 602, 604, which may again be examples of containers 112 described above with reference to Fig. 1, are shown on the container support frames 702a, 702b.

With reference now to Fig. 7A to 7D in combination with the sequence of Fig. 10, container 602 is shown as having been received by the port 700 as described by step S400 of Fig. 10.

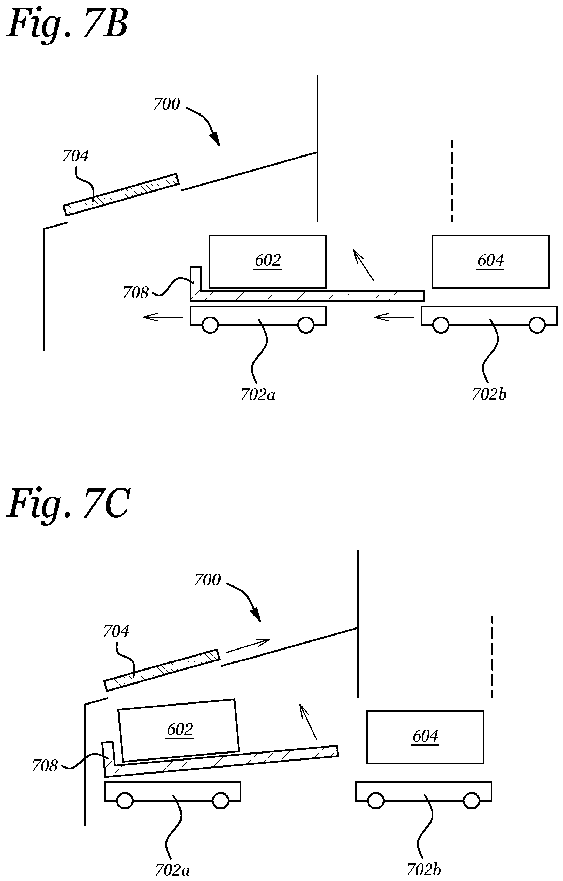

Fig. 7B shows step S405, wherein container support frame 702a starts to translate container 602 towards a container lift position which is located beneath the hatch 704 of the port 700. In Fig. 7B this is represented by a translation of the containers 602, 604 to the left as shown by the horizontal arrows of Fig. 7B. Container support frame 702b is also shown translating container 604 to a position to retrieve the container 604 from the port 700.

Also shown in Fig. 7B is step S410, where the container lift 708 has been instructed to start moving. In Fig. 7B this is represented by a lifting of the container 602 in a diagonally upwards direction as shown by the diagonally upward arrow of Fig. 7B. At step S415, translation is completed and container support 702a has come to a stop at the desired position. Importantly, between step S410 and step S415 the container support 702a and the container lift 708 operate concurrently, eliminating any lag between the container 602 arriving at the container lifting position and the container 602 being lifted by the container lift 708. In particular, during the period in which step S415 is being completed, for example as container support 702a comes to the desired position below hatch 704, the container lift 708 is already initiated to move. This means that any lag due to a delay in the container lift 708 moving (e.g. due to slack in the component or transmission delay in the instructions) does not delay movement of the container 602. Instead, by the time container lift 708 actually starts moving, the first movement operation has completed and the container 602 is in position under hatch 704. The container lift 708 then lifts the container 602 in a diagonally upwards direction towards hatch 704.

Fig. 7C shows that the container support frame 702a has arrived at the container lift position as described at step S415. The container lift 708 is shown as beginning to lift the container 602, as described by step S420. Additionally, container lift 708 is instructed to tilt the container 602 as described by step S425. In the present example, both the lifting and tilting are achieved in a single motion achieved by pivoting container lift 708, and so in this specific example step S425 is effectively concurrent with step S410. However, it will be appreciated that this is merely an example and in other examples the lifting and tilting steps may be performed separately. It will be appreciated that steps S400, S405, S410, S415 and 420 are equivalent to steps S300, S305, S310, S315 and 320 of Fig. 9.

Also in Fig. 7C, hatch 704 is shown as instructed to open, as described at step S430, in order to expose an opening 710. The hatch 704 opening operation and the tilting operation thereby both overlap with the container lifting operation. In particular, during the period in which step S420 and S425 are being completed and container 602 is being lifted and tilted, opening of hatch 704 is already initiated. This means that any lag due to a delay in the hatch 740 moving (e.g. due to slack in the component or transmission delay in the instructions) does not delay presentation of the container 602. Instead, by the time the container 602 arrives at the presentation position, the hatch 704 has already started opening.

Fig. 7D shows steps S435, S440 and S445. The tilting, lifting and hatch opening operations have been completed and the container 602 is now presented to a picker in a presentation position. It will be appreciated that steps S430, S440, S445 are equivalent to steps S325, S330 and S335 of Fig. 9.

### Penultimate comments

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

Also disclosed herein are a number of examples according to the following numbered clauses.
1. A computer-implemented method for moving a container within a port of an automated storage and retrieval system, comprising:
   executing, by a first component of a port, a first movement operation associated with a container; and
   executing, by a second component of the port, a second movement operation associated with the container;
   wherein the second movement operation is initiated while the first movement operation is ongoing.
2. A method according to clause 1, wherein the first component comprises a container support.
3. A method according to clause 2, wherein the container support comprises a conveyor belt.
4. A method according to clause 2, wherein the container support comprises one or more independently movable frames configured to accommodate a container.
5. A method according any of clauses 2 - 4, wherein the first movement operation comprises translating a container within the port using the container support.
6. A method according to any of clauses 1-5, wherein the second component comprises a container lift.
7. A method according to clause 6, wherein the second movement operation comprises lifting a container towards an opening in the port using the container lift.
8. A method according to any preceding clause, further comprising initiating, by the second component, a third movement operation associated with the container while the second movement operation is ongoing.
9. A method according to clause 8, wherein the third movement operation comprises tilting the container.
10. A method according to any preceding clause, further comprising executing, by a/the third component, a fourth movement operation associated with the container.
11. A method according to clause 10, wherein the fourth movement operation is initiated whilst the second and/or third movement operation is ongoing.
12. A method according to any of clauses 10 or 11, wherein the third component comprises a hatch arranged to cover an opening of the port.
13. A method according to clause 12, wherein the fourth movement operation comprises opening the hatch.
14. A method according to clause 1 wherein the first component comprises a container lift and the second component comprises a hatch.
15. A method according to clause 14, wherein the first movement operation comprises lifting the container using the container lift.
16. A method according to clause 14 or clause 15, wherein the first movement operation comprises tilting the container using the container lift.
17. A method according to clause 14, 15 or 16, wherein the second movement operation comprises opening the hatch.
18. A method according to clause 1, wherein the first component comprises a hatch arranged to cover an opening of the port.
19. A method according to clause 18, wherein the second component comprises a container lift.
20. A method according to clause 19, wherein the first movement operation comprises closing the hatch, and the second movement operation comprises lowering the container away from the opening in the port using the container lift.
21. A method according to clause 1, wherein the first component comprises a container lift.
22. A method according to clause 21, wherein the second component comprises a container support.
23. A method according to clause 22, wherein the first movement operation comprises lowering a container away from an opening in a port using the container lift, and the second movement operation comprises translating the container within the port using the container support.
24. A port for an automated storage and retrieval system, comprising:
   a first component; and
   a second component;
   wherein the port is configured to perform the method of any of clauses 1 - 9.
25. A port according to clause 24, further comprising a third component, wherein the port is configured to perform the method of any of clauses 1 - 23.
26. A port according to clause 25, wherein the third component is a hatch arranged to cover an opening of the port.
27. A port according to any of clauses 24 - 26 wherein the first component comprises a container support.
28. A port according to any of clauses 24 -27, wherein the container support comprises a conveyor belt.
29. A port according to any of clauses 24-28, wherein the container support comprises one or more independently movable frames configured to accommodate a container.
30. A port according to any of clauses 24 - 29 wherein the second component comprises a container lift.
31. A port according to clause 30, wherein the container lift is configured to tilt a container.
32. A port according to any of clauses 24-31, wherein the port comprises a computing device configured to control the port.
33. An automated storage and retrieval system comprising a port according to any of clauses 24-32.
34. An automated storage and retrieval system comprising a computing device and a port according to any of clauses 24-31, wherein the computing device is configured to control the port.

## Claims

1. A computer-implemented method for moving a container within a port of an automated storage and retrieval system, comprising:
executing, by a first component of a port, a first movement operation associated with a container; and
executing, by a second component of the port, a second movement operation associated with the container;
wherein the second movement operation is initiated while the first movement operation is ongoing.

2. A method according to claim 1, wherein the first component comprises a container support.

3. A method according to claim 2, wherein the container support comprises a conveyor belt.

4. A method according to claim 2, wherein the container support comprises one or more independently movable frames configured to accommodate a container.

5. A method according any of claims 2 - 4, wherein the first movement operation comprises translating a container within the port using the container support.

6. A method according to any of claims 1-5, wherein the second component comprises a container lift.

7. A method according to claim 6, wherein the second movement operation comprises lifting a container towards an opening in the port using the container lift.

8. A method according to any preceding claim, further comprising initiating, by the second component, a third movement operation associated with the container while the second movement operation is ongoing.

9. A method according to claim 8, wherein the third movement operation comprises tilting the container.

10. A method according to any preceding claim, further comprising executing, by a/the third component, a fourth movement operation associated with the container.

11. A method according to claim 10, wherein the fourth movement operation is initiated whilst the second and/or third movement operation is ongoing.

12. A method according to any of claims 10 or 11, wherein the third component comprises a hatch arranged to cover an opening of the port.

13. A method according to claim 12 when dependent on claim 10 or 11, wherein the fourth movement operation comprises opening the hatch.

14. A port for an automated storage and retrieval system, comprising:
a first component;
a second component; and
a third component;
wherein the port is configured to perform the method of any of claims 1 - 13.

15. A computer readable medium storing instructions which when executed cause a port of an automated storage and retrieval system to perform the method of claims 1-13.
